# EUROPEAN PATENT APPLICATION

(11) **EP 4 425 744 A1**
(43) Date of publication of application: **04.09.2024**
(21) Application number: 23159479.7
(22) Date of filing: 01.03.2023
(51) Int. Cl.: H02J 7/04, H02M 7/06, H02J 7/00

(54) **AN ELECTRIC POWER SYSTEM FOR SUPPLYING ELECTRIC ENERGY TO A VESSEL**

(71) Applicant: Danfoss A/S, 6430 Nordborg (DK)
(72) Inventor: LANA, Andrey, 53600 LAPPEENRANTA (FI); PAAKKUNAINEN, Jussi, 53600 LAPPEENRANTA (FI); MOOS, Jesper, 53600 LAPPEENRANTA (FI)
(74) Representative: Väänänen, Janne Kalervo

(57) **Abstract**

An electric power system for supplying direct voltage from shore-side to a vessel (120) comprises a transformer (101) whose primary side is connectable to a shore-side alternating voltage network (130), a diode or thyristor rectifier (102) whose alternating voltage terminals are connected to a secondary side of the transformer, electric connectors (103) for connecting to the vessel, and a direct voltage link (104) for transferring the direct voltage from direct voltage terminals of the rectifier to the electric connectors. The transformer comprises an on-load tap-changer (105) for changing a transformation ratio. The electric power system comprises a controller (106) for controlling the on-load tap-changer to control the direct voltage supplied to the vessel. Natural switching of rectifier diodes or thyristors does not induce potentially harmful high-frequency common mode voltages and currents. Furthermore, the number of power conversions is minimized, which provides an energy efficient power transfer.

## Description

### Field of the disclosure

The disclosure relates to an electric power system for supplying electric power from shore-side to a vessel. Furthermore, the disclosure relates to a vessel that can be, for example but not necessarily, a ship, a boat, or a ferry.

### Background

In many cases there is a need to supply electric power from shore-side to a vessel when the vessel is at a berth. The vessel can be for example an electric vessel that comprises a chargeable battery system and an electric propulsion system energized by the chargeable battery system. It is also possible that the vessel is a conventional combustion engine vessel, and the vessel is connected to a shore-side alternating voltage network instead of using auxiliary generators of the vessel for producing the electricity needed when the vessel is at a berth.

It is not always possible to connect the shore-side alternating voltage network to the on-board alternating voltage network of the vessel as the vessel may use different frequency and/or voltage level than the shore-side alternating voltage network. For example, the frequency of 50 Hz is used in Europe whereas the frequency of 60 Hz is used in North America. In cases where the above-mentioned alternating voltage networks can be connected to each other, a berthing time can be relatively long because of a required synchronization and phase-order check between the alternating voltage networks.

Publication WO2007060189 describes a known solution to connect a shore-side alternating voltage network to a vessel. In this solution, a converter is installed on the vessel. The on-board converter is connected to the shore-side alternating voltage network through a cable. The on-board converter is typically a frequency converter for converting alternating voltage received from the shore-side alternating voltage network into alternating voltage having a voltage level and frequency suitable for an alternating voltage network of the vessel. It is also possible that the on-board converter is a rectifier for converting the alternating voltage received from the shore-side alternating voltage network into direct voltage having a voltage level suitable for the vessel, e.g. for charging batteries of the vessel. It is also possible that there is a shore-side converter instead of, or in addition to, the above-mentioned on-board converter. In many cases, a shore-side converter and/or an on-board converter is an active converter which creates high frequency common mode voltages and thereby common mode currents between a vessel hull and a ground raising corrosion possibility of parts of a vessel.

### Summary

The following presents a simplified summary to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments.

In accordance with the invention, there is provided a new electric power system for supplying direct voltage from shore-side to a vessel that can be for example a ship, a boat, or a ferry. An electric power system according to the invention comprises:
- a transformer comprising a primary side and a secondary side, the primary side being connectable to a shore-side alternating voltage network,
- a diode or thyristor rectifier having alternating voltage terminals and direct voltage terminals, the alternating voltage terminals being connected to the secondary side of the transformer and,
- electric connectors connectable to an electric circuitry of the vessel, and
- a direct voltage link configured to transfer the direct voltage from the direct voltage terminals of the diode or thyristor rectifier to the electric connectors.

The above-mentioned transformer comprises an on-load tap-changer configured to change a transformation ratio of the transformer, and the electric power system comprises a controller configured to control the on-load tap-changer to control the direct voltage supplied to the vessel, e.g. to ramp up the direct voltage during a starting phase of the direct voltage supply to the vessel.

Natural switching of rectifier diodes or thyristors does not induce potentially harmful high-frequency common mode voltages "CMV", and thereby high-frequency common mode currents "CMC" can be avoided. Therefore, the problem of potential corrosion of parts of a vessel can be eliminated or at least reduced. Furthermore, amount of power conversions can be minimized to achieve energy efficient power transfer because the level of the direct voltage supplied to the vessel can be controlled with the on-load tap-changer and, in a case of a thyristor rectifier, by controlling firing angles of the thyristors, too. Thus, there is typically no need for a direct voltage "DC-DC" converter to control the level of the direct voltage supplied to the vessel.

In accordance with the invention, there is also provided a new vessel that comprises:
- electric connectors capable of receiving direct voltage from a shore-side electric power system,
- one or more controllable direct voltage "DC-DC" converters,
- a control system for controlling the one or more controllable direct voltage converters to convert the direct voltage received via the electric connectors into one or more direct voltages suitable for the vessel, and
- one or more diodes configured to prevent electric current representing power transfer from the vessel via the electric connectors.

The one or more diodes prevent unwanted power flow from e.g. a capacitive energy storage of the vessel to the shore-side when the shore-side direct voltage is lower than direct voltage of the capacitive energy storage of the vessel.

A vessel according to an exemplifying and non-limiting embodiment comprises a chargeable battery system for receiving charging energy via the electric connectors of the vessel and for supplying electric power to a propulsion system of the vessel.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features.

The features recited in dependent claims are mutually freely combinable unless otherwise explicitly stated.

Furthermore, it is to be understood that the use of "a" or "an", i.e. a singular form, throughout this document does not exclude a plurality.

### Brief description of the figures

Exemplifying and non-limiting embodiments and their advantages are explained in greater detail below in the sense of examples and with reference to the accompanying drawings, in which:
figure 1 illustrates an electric power system according to an exemplifying and non-limiting embodiment and a vessel according to an exemplifying and non-limiting embodiment, and
figures 2a, 2b, and 2c illustrate parts of electric power systems according to exemplifying and non-limiting embodiments.

### Description of the exemplifying embodiments

The specific examples provided in the description given below should not be construed as limiting the scope and/or the applicability of the appended claims. Lists and groups of examples provided in the description given below are not exhaustive unless otherwise explicitly stated.

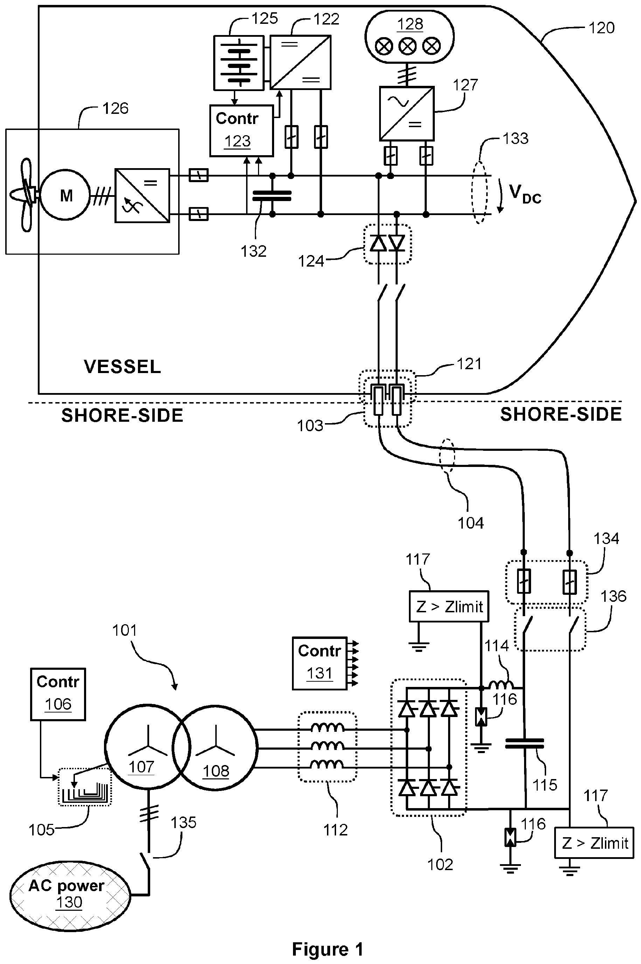

Figure 1 shows a schematic illustration of an electric power system according to an exemplifying and non-limiting embodiment. Furthermore, figure 1 shows a schematic illustration of a vessel 120 according to an exemplifying and non-limiting embodiment. The vessel 120 can be for example a ship, a boat, or a ferry. The electric power system is located on the shore-side, and the electric power system is arranged to supply electric power to the vessel 120. The electric power system comprises a transformer 101 that comprises a primary side and a secondary side. The primary side of the transformer 101 is connectable to a shore-side alternating voltage network 130. The electric power system comprises rectifier 102 that has alternating voltage terminals and direct voltage terminals. In this exemplifying case, the alternating voltage terminals of the rectifier 102 are connected to the secondary side of the transformer 101 via alternating current serial-chokes 112. The serial-chokes 112 suppress high-frequency current components on the secondary currents of the transformer 101 i.e. on the input currents of the rectifier. It is however also possible to use an inductor-capacitor "LC" filter or an inductor-capacitor-inductor "LCL" filter between the transformer 101 and the rectifier 102. It is also possible that the rectifier is directly connected to the secondary side of the transformer 101 in cases in which the stray inductances of the transformer provide a sufficient filtering effect.

The electric power system comprises electric connectors 103 which are connectable to an electric circuitry of the vessel 120, and a direct voltage link 104 configured to transfer the direct voltage from the direct voltage terminals of the rectifier 102 to the electric connectors 103. The transformer 101 comprises an on-load tap-changer 105 for changing a transformation ratio of the transformer 101. The electric power system comprises a controller 106 configured to control the on-load tap-changer 105 to control the direct voltage supplied to the vessel 120 in accordance with a desired value, i.e. a reference value, of the direct voltage, e.g. to ramp up the direct voltage during a starting phase of the direct voltage supply to the vessel 120 in accordance with an increasing reference value. In the exemplifying electric power system illustrated in figure 1, the transformer 101 comprises a star-connected three-phase primary winding 107 and a star-connected three-phase secondary winding 108, and the rectifier 102 is a six-pulse thyristor rectifier.

Controlled firings and natural off-switching of the rectifier thyristors do not induce potentially harmful high-frequency common mode voltages "CMV", and thereby high-frequency common mode currents "CMC" can be avoided. Therefore, the problem of potential corrosion of parts of the vessel 120 can be eliminated or at least reduced. Furthermore, amount of power conversions is minimized to achieve energy efficient power transfer because the level of the direct voltage supplied to the vessel 120 can be controlled with the on-load tap-changer and, in this exemplifying case, by controlling firing angles of the rectifier thyristors. The electric power system comprises a controller 131 configured to control the firing angles of the rectifier thyristors so that the direct voltage of the direct voltage link 104 has a desired value.

In the exemplifying electric power system illustrated in figure 1, the rectifier 102 is connected via a direct current serial-choke 114 to the direct voltage link 104. Furthermore, the electric power system comprises a capacitor 115 between poles of the direct voltage link 104. Thus, in this exemplifying case, there is an inductor-capacitor "LC" filter between the rectifier 102 and the direct voltage link 104.

In a system according to an exemplifying and non-limiting embodiment, the direct voltage terminals of the rectifier 102 are connected via over-voltage protectors 116 to the ground. The over-voltage protectors 116 can be e.g. spark-gaps or metal oxide over-voltage protectors. A system according to an exemplifying and non-limiting embodiment comprises insulation monitoring devices 117 between the direct voltage terminals of the rectifier 102 and the ground. The insulation monitoring devices 117 can be configured to, for example, activate an alarm if too high leakage current between a direct voltage terminal of the rectifier 102 and the ground is detected.

The vessel 120 comprises electric connectors 121 for receiving the above-mentioned direct voltage from the above-mentioned direct voltage link 104. In this exemplifying case, the vessel 120 is an electric vessel that comprises a chargeable battery system 125 for receiving charging energy via the electric connectors 121 and for supplying electric power to a propulsion system 126. It is also possible that the vessel is for example a chargeable hybrid vessel that comprises a chargeable battery system and a drive train comprising at least one electric machine and a combustion engine. The vessel 120 may further comprise an inverter 127, or two or more inverters, for converting the direct voltage V_{DC} of a direct voltage link 133 into one or more alternating voltages suitable for alternating voltage systems 128 of the vessel 120. The vessel 120 comprises diodes 124 configured to prevent electric power transfer from the vessel 120 to the shore-side via the electric connectors 121. In the exemplifying vessel 120 illustrated in figure 1, the diodes 124 prevent unwanted power flow from a filtering capacitor 132 of the direct voltage link 133 when the shore-side direct voltage is lower than the direct voltage of the filtering capacitor 132.

The vessel 120 comprises a direct voltage converter 122 and a controller 123 for controlling the direct voltage converter 122 to convert the direct voltage received via the electric connectors 121 into direct voltage suitable for the chargeable battery system 125 when the battery system 125 is being charged. Furthermore, the direct voltage converter 122 is configured to supply electric energy from the battery system 125 to the direct voltage link 133 when the vessel 120 is not connected to the direct voltage link 104. The direct voltage converter 122 is advantageously controlled so that the direct voltage V_{DC} of the direct voltage link 133 is kept substantially constant even if the voltage of the chargeable battery system 125 were changing. The vessel 120 may further comprise one or more other direct voltage converters configured to convert the direct voltage received via the electric connectors 121 into one or more direct voltages suitable for various devices and/or systems of the vessel 120.

Each of the above-mentioned controllers 106, 123, and 131 can be implemented with one or more processor circuits each of which can be a programmable processor circuit provided with appropriate software, a dedicated hardware processor such as for example an application specific integrated circuit "ASIC", or a configurable hardware processor such as for example a field programmable gate array "FPGA". Furthermore, each of the above-mentioned controllers may comprise one or more memory circuits such as e.g. a Random Access Memory "RAM" circuit.

Each of the capacitors 115 and 132 may comprise one or more capacitor elements each of which can be for example an electric double layer capacitor element "EDLC" which can be also called a "super capacitor".

In the exemplifying electric power system illustrated in figure 1, the direct voltage link 104 comprises over-current protectors 134 and, correspondingly, the vessel 120 comprises over-current protectors. Each over-current protector can be for example a fuse or an over-current protector relay or another protector circuit breaker.

The exemplifying electric power system illustrated in figure 1 comprises a supply breaker 135 for interrupting the electric power supply from the shore-side alternating voltage network 130 to the transformer 101 and a breaker 136 for interrupting the electric power supply from the electric power system to the vessel 120. The supply breaker 135 and the breaker 136 can be controlled e.g. by the controller 106 so that the breakers are set into a non-conductive state in response to a fault situation in the transformer 101, in the rectifier 102, and/or in another part of the electric power system for supplying electric power from the shore-side to the vessel.

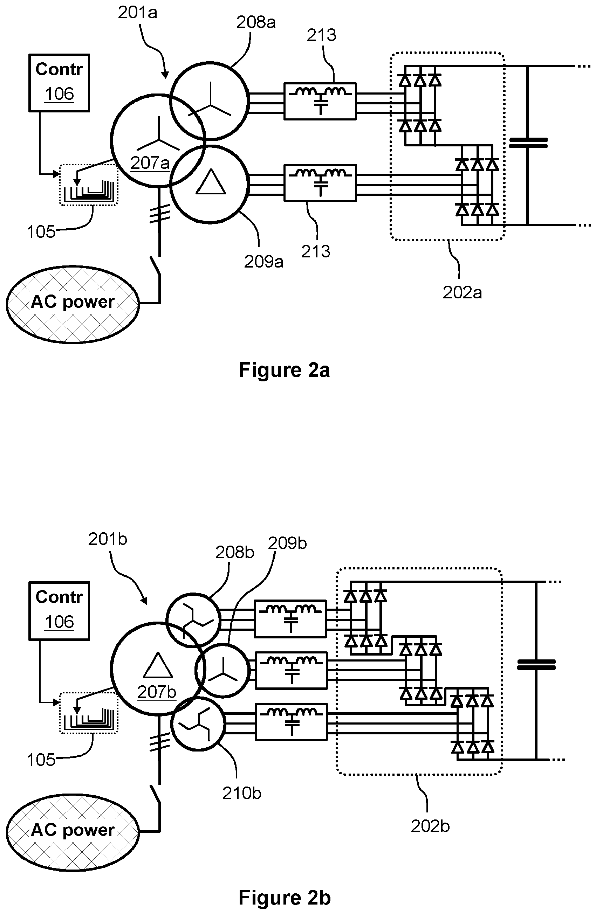

Figure 2a illustrates a part of an electric power system according to an exemplifying and non-limiting embodiment for supplying electric power from shore-side to a vessel. The transformer 201a of the electric power system comprises a three-phase primary winding 207a and two three-phase secondary windings 208a and 208b whose three-phase voltages have a phase-shift with respect to each other. In this exemplifying electric power system, the first three-phase secondary winding 208a is a star-connected three-phase winding and the second three-phase secondary winding 209a is a delta-connected three-phase winding. The electric power system comprises an inductor-capacitor-inductor "LCL" filters 213 between the rectifier 202a and the secondary windings 208a and 209a of the transformer 201a. The rectifier 202a of the electric power system is a twelve-pulse diode rectifier.

Figure 2b illustrates a part of an electric power system according to an exemplifying and non-limiting embodiment for supplying electric power from shore-side to a vessel. The transformer 201b of the electric power system comprises a three-phase primary winding 207b and three three-phase secondary windings 208b, 209b, and 210b whose three-phase voltages have phase-shifts with respect to each other. In this exemplifying electric power system, the first three-phase secondary winding 208b is a zigzag-connected three-phase winding, the second three-phase secondary winding 209b is a star-connected three-phase winding, and the third three-phase secondary winding 210b is a zigzag-connected three-phase winding having an opposite handedness with respect to the first three-phase secondary winding 208b. The electric power system comprises inductor-capacitor-inductor "LCL" filters between the rectifier 202b and the secondary windings 208b, 209b, and 210b of the transformer 201b. The rectifier 202b of the electric power system is an eighteen-pulse diode rectifier.

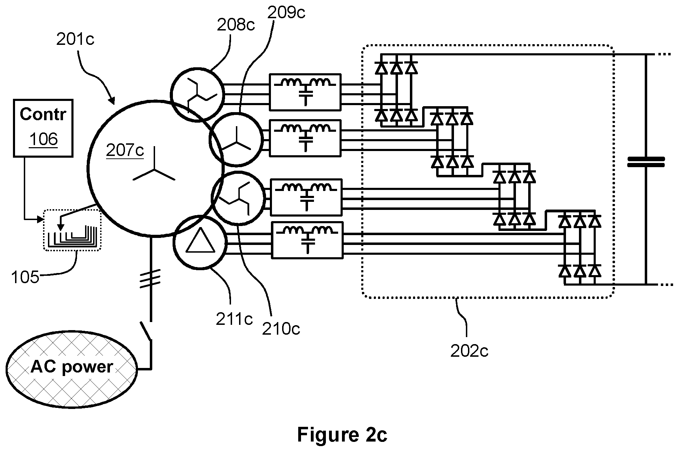

Figure 2c illustrates a part of an electric power system according to an exemplifying and non-limiting embodiment for supplying electric power from shore-side to a vessel. The transformer 201c of the electric power system comprises a three-phase primary winding 207c and four three-phase secondary windings 208c, 209c, 210c, and 211c whose three-phase voltages have phase-shifts with respect to each other. In this exemplifying electric power system, the first three-phase secondary winding 208c is a zigzag-connected three-phase winding, the second three-phase secondary winding 209c is a star-connected three-phase winding, the third three-phase secondary winding 210c is a zigzag-connected three-phase winding having an opposite handedness with respect to the first three-phase secondary winding 208c, and the fourth three-phase secondary winding 211c is a delta-connected three-phase winding. The electric power system comprises inductor-capacitor-inductor "LCL" filters between the rectifier 202c and the secondary windings 208c, 209c, 210c, and 210c of the transformer 201c. The rectifier 202c of the electric power system is a twenty-four -pulse diode rectifier.

The specific examples provided in the description given above should not be construed as limiting the applicability and/or the interpretation of the appended claims. Lists and groups of examples provided in the description given above are not exhaustive unless otherwise explicitly stated.

## Claims

1. An electric power system for supplying direct voltage from shore-side to a vessel, the electric power system comprising:
- a transformer (101, 201a-201c) comprising a primary side and a secondary side, the primary side being connectable to a shore-side alternating voltage network,
- a diode or thyristor rectifier (102, 202a-202c) having alternating voltage terminals and direct voltage terminals, the alternating voltage terminals being connected to the secondary side of the transformer and,
- electric connectors (103) connectable to an electric circuitry of the vessel, and
- a direct voltage link (104) configured to transfer the direct voltage from the direct voltage terminals of the diode or thyristor rectifier to the electric connectors,
**characterized in that** the transformer comprises an on-load tap-changer (105) configured to change a transformation ratio of the transformer, and the electric power system comprises a controller (106) configured to control the on-load tap-changer to control the direct voltage supplied to the vessel.

2. An electric power system according to claim 1, wherein the transformer (101) comprises a three-phase primary winding (107) and a three-phase secondary winding (108), and the diode or thyristor rectifier (102) is a six-pulse rectifier.

3. An electric power system according to claim 1, wherein the transformer (201a) comprises a three-phase primary winding (207a) and two three-phase secondary windings (208a, 209a) whose three-phase voltages have a phase-shift with respect to each other, and the diode or thyristor rectifier (202a) is a twelve-pulse rectifier.

4. An electric power system according to claim 3, wherein a first one (208a) of the three-phase secondary windings is a star-connected three-phase winding, and a second one (209a) of the three-phase secondary windings is a delta-connected three-phase winding.

5. An electric power system according to claim 1, wherein the transformer (210b) comprises a three-phase primary winding (207b) and three three-phase secondary windings (208b-210b) whose three-phase voltages have phase-shifts with respect to each other, and the diode or thyristor rectifier is an eighteen-pulse rectifier.

6. An electric power system according to claim 5, wherein a first one (208b) of the three-phase secondary windings is a zigzag-connected three-phase winding, a second one (209b) of the three-phase secondary windings is a star-connected three-phase winding, and a third one (210b) of the three-phase secondary windings is a zigzag-connected three-phase winding having an opposite handedness with respect to the first one of the three-phase secondary windings.

7. An electric power system according to claim 1, wherein the transformer (210c) comprises a three-phase primary winding (207c) and four three-phase secondary windings (208c-211c) whose three-phase voltages have phase-shifts with respect to each other, and the diode or thyristor rectifier is a twenty-four -pulse rectifier.

8. An electric power system according to claim 7, wherein a first one (208c) of the three-phase secondary windings is a zigzag-connected three-phase winding, a second one (209c) of the three-phase secondary windings is a star-connected three-phase winding, a third one (210c) of the three-phase secondary windings is a zigzag-connected three-phase winding having an opposite handedness with respect to the first one of the three-phase secondary windings, and a fourth one (211c) of the three-phase secondary windings is a delta-connected three-phase winding.

9. An electric power system according to any one of claims 1-8, wherein the secondary side of the transformer is connected via alternating current serial-chokes (112) to the alternating voltage terminals of the diode or thyristor rectifier.

10. An electric power system according to any one of claims 1-9, wherein the direct voltage terminals of the diode or thyristor rectifier are connected via at least one direct current serial-choke (114) to the direct voltage link.

11. An electric power system according to any one of claims 1-10, wherein the electric power system comprises one or more capacitors (115) between poles of the direct voltage link 104.

12. An electric power system according to any one of claims 1-11, wherein the direct voltage terminals of the diode or thyristor rectifier are connected via over-voltage protectors (116) to a ground.

13. An electric power system according to any one of claims 1-12, wherein the electric power system comprises insulation monitoring devices (117) between each of the direct voltage terminals of the diode or thyristor rectifier and a ground.

14. A vessel (120) comprising:
- electric connectors (121) capable of receiving direct voltage from a shore-side electric power system,
- one or more controllable direct voltage converters (122), and
- a controller (123) for controlling the one or more controllable direct voltage converters to convert the direct voltage received via the electric connectors into one or more direct voltages suitable for the vessel,
**characterized in that** the vessel comprises one or more diodes (124) configured to prevent electric current representing power transfer out from the vessel via the electric connectors.

15. A vessel according to claim 14, wherein the vessel comprises a chargeable battery system (125) and the one or more controllable direct voltage converters are configured to supply charging energy to the chargeable battery system.

## Amended claims

### Amended claims in accordance with Rule 137(2) EPC.

1. An electric power system for supplying direct voltage from shore-side to a vessel, the electric power system comprising:
- a transformer (101, 201a-201c) comprising a primary side and a secondary side, the primary side being connectable to a shore-side alternating voltage network,
- a thyristor rectifier (102, 202a-202c) having alternating voltage terminals and direct voltage terminals, the alternating voltage terminals being connected to the secondary side of the transformer and,
- electric connectors (103) connectable to an electric circuitry of the vessel, and
- a direct voltage link (104) configured to transfer the direct voltage from the direct voltage terminals of the thyristor rectifier to the electric connectors,
**characterized in that** the transformer comprises an on-load tap-changer (105) configured to change a transformation ratio of the transformer, and the electric power system comprises a controller (106) configured to control the on-load tap-changer to control the direct voltage supplied to the vessel.

2. An electric power system according to claim 1, wherein the transformer (101) comprises a three-phase primary winding (107) and a three-phase secondary winding (108), and the thyristor rectifier (102) is a six-pulse rectifier.

3. An electric power system according to claim 1, wherein the transformer (201a) comprises a three-phase primary winding (207a) and two three-phase secondary windings (208a, 209a) whose three-phase voltages have a phase-shift with respect to each other, and the thyristor rectifier (202a) is a twelve-pulse rectifier.

4. An electric power system according to claim 3, wherein a first one (208a) of the three-phase secondary windings is a star-connected three-phase winding, and a second one (209a) of the three-phase secondary windings is a delta-connected three-phase winding.

5. An electric power system according to claim 1, wherein the transformer (210b) comprises a three-phase primary winding (207b) and three three-phase secondary windings (208b-210b) whose three-phase voltages have phase-shifts with respect to each other, and the thyristor rectifier is an eighteen-pulse rectifier.

6. An electric power system according to claim 5, wherein a first one (208b) of the three-phase secondary windings is a zigzag-connected three-phase winding, a second one (209b) of the three-phase secondary windings is a star-connected three-phase winding, and a third one (210b) of the three-phase secondary windings is a zigzag-connected three-phase winding having an opposite handedness with respect to the first one of the three-phase secondary windings.

7. An electric power system according to claim 1, wherein the transformer (210c) comprises a three-phase primary winding (207c) and four three-phase secondary windings (208c-211c) whose three-phase voltages have phase-shifts with respect to each other, and the thyristor rectifier is a twenty-four -pulse rectifier.

8. An electric power system according to claim 7, wherein a first one (208c) of the three-phase secondary windings is a zigzag-connected three-phase winding, a second one (209c) of the three-phase secondary windings is a star-connected three-phase winding, a third one (210c) of the three-phase secondary windings is a zigzag-connected three-phase winding having an opposite handedness with respect to the first one of the three-phase secondary windings, and a fourth one (211c) of the three-phase secondary windings is a delta-connected three-phase winding.

9. An electric power system according to any one of claims 1-8, wherein the secondary side of the transformer is connected via alternating current serial-chokes (112) to the alternating voltage terminals of the thyristor rectifier.

10. An electric power system according to any one of claims 1-9, wherein the direct voltage terminals of the thyristor rectifier are connected via at least one direct current serial-choke (114) to the direct voltage link.

11. An electric power system according to any one of claims 1-10, wherein the electric power system comprises one or more capacitors (115) between poles of the direct voltage link 104.

12. An electric power system according to any one of claims 1-11, wherein the direct voltage terminals of the thyristor rectifier are connected via over-voltage protectors (116) to a ground.

13. An electric power system according to any one of claims 1-12, wherein the electric power system comprises insulation monitoring devices (117) between each of the direct voltage terminals of the thyristor rectifier and a ground.
